# EUROPEAN PATENT APPLICATION

(11) **EP 3 629 275 A1**
(43) Date of publication of application: **01.04.2020**
(21) Application number: 18210890.2
(22) Date of filing: 06.12.2018
(51) Int. Cl.: G06Q 30/00, G06Q 20/12, G06Q 20/38, G06Q 30/06

(54) **METHOD OF MANAGING OWNERSHIP OF VIRTUAL OBJECT AND RELATED INTERACTIVE PLATFORM**

(30) Priority: 25.09.2018 US 201816140542
(71) Applicant: XRSpace CO., LTD., Taoyuan City 330 (TW)
(72) Inventor: Chou, Peter, 100 Taipei City (TW); Che, Chih-Heng, 105 Taipei City (TW)
(74) Representative: Straus, Alexander

(57) **Abstract**

An interactive platform (10) for managing an ownership of a virtual object includes a processing unit (100); and a storage unit (102), for storing a program code (1020) to instruct the processing unit (100) to perform using a blockchain method to encrypt the virtual object after a first owner provides the virtual object in the interactive platform (202); and using the blockchain method to encrypt the virtual object when the ownership of the virtual object is changed in the interactive platform (204); wherein a blockchain corresponding to the virtual object is formed by at least one user who have possessed the virtual object.

## Description

### Field of the Invention

This present disclosure relates to a method of managing an ownership of a virtual object and a related interactive platform, and more particularly, to a method capable of managing the ownership of the virtual object according to a blockchain method and a related interactive platform.

### Background of the Invention

Piracy of creator's intellectual property is one of the most important reasons that obstruct the development of market economy. Under such a circumstance that the creation may be easily prated, a creator is discouraged to create or to publish his/her creation. In order to prevent privacy, in the prior art for a physical object, various kinds of verifications are applied such that a customer may easily tell the authenticity of the merchandise.

As to a virtual object (such as music, literature, video, program, etc.), it is getting more popular for its convenience and easy access, such that the customer may store the virtual object in a storage device and obtain it through a portable device. However, the characteristic of convenience and easy access of the virtual object also degrades the protection of intellectual property to the virtual object. Piracy of the virtual object is flooded and the intellectual property of the virtual object may not be effectively protected, which resulted in discouraging the creator to create or publish his/her creation. Therefore, due to the lack of protection of the intellectual property of the virtual object, there is necessity to improve over the prior art.

### Summary of the Invention

Therefore, the present application provides a method and related interactive platform capable of verifying the validity of the virtual object and managing the ownership of the owner to improve over the prior art.

This is achieved by a method according to the independent claim 1 or by an interactive platform according to the independent claim 6 here below. The dependent claims pertain to corresponding further developments and improvements.

As will be seen more clearly from the detailed description following below, the claimed method of managing an ownership of a virtual object in an interactive platform comprises using a blockchain method to encrypt the virtual object after a first owner provides the virtual object in the interactive platform; and using the blockchain method to encrypt the virtual object when the ownership of the virtual object is changed in the interactive platform; wherein a blockchain corresponding to the virtual object is formed by at least one user who have possessed the virtual object.

In another aspect, the claimed interactive platform for managing an ownership of a virtual object comprises a processing unit; and a storage unit, for storing a program code to instruct the processing unit to perform the following steps using a blockchain method to encrypt the virtual object after a first owner provides the virtual object in the interactive platform; and using the blockchain method to encrypt the virtual object when the ownership of the virtual object is changed in the interactive platform; wherein a blockchain corresponding to the virtual object is formed by at least one user who have possessed the virtual object.

### Brief Description of the Drawings

Fig. 1 is a schematic diagram of an interactive platform according to an embodiment of the present disclosure.
Fig. 2 is a schematic diagram of a process according to an embodiment of the present disclosure.

### Detailed Description

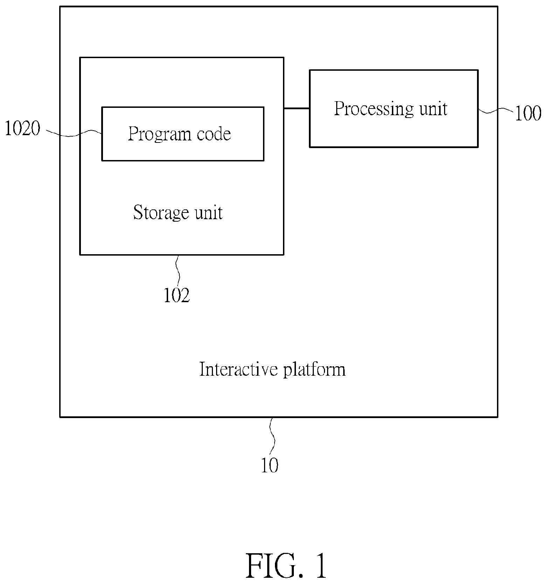

Please refer to Fig. 1, which is a schematic diagram of an interactive platform 10 according to an embodiment of the present disclosure. The interactive platform 10 is a virtual reality (VR) platform, an augmented reality (AR) platform, a mixed reality (MR) platform or an extended reality (XR) platform for a user to create and exchange a virtual object. Moreover, the interactive platform 10 is capable of protecting the intellectual property of the user from piracy. Through thorough encryption to ownership management to the virtual object, the interactive platform 10 may protect the virtual object from illegal duplication.

More specifically, the user of the interactive platform 10 is able to create or provide the virtual object in the platform to trade, exchange or donate the virtual object to an another user. The user may obtain a content of the virtual object after possessing an ownership of the virtual object. In other words, the user may possess the virtual object through trading, exchanging or accepting transfer and the user who owns the virtual object may watch, read or listen the content of the virtual object through a linked device or under a VR/AR/MR/XR environment through a VR/AR/MR/XR device. For example, the virtual object may be a post, an image, a video, a soundtrack, an e-book, etc., and the owner is able to obtain the content of the virtual object through a VR/AR/MR/XR device. In another example, when the virtual object is a VR/AR/MR/XR game, the user is able to immerse himself/herself in the VR/AR/MR/XR environment and enjoy the game. Notably, the interactive platform 10 further records a complete ownership of the virtual object, such that every user who has ever owned the virtual object is traceable to further avoid piracy in the interactive platform 10. Therefore, through thorough encryption and ownership management to the virtual object in the interactive platform 10, piracy on the interactive platform 10 may be effectively avoided and further improve user experience.

As shown in Fig. 1, the interactive platform comprises a processing unit 100 and a storage unit 102. The processing unit 100 may encrypt and manage the ownership of the virtual object. A program code 1020, stored in the storage unit 102, is configured to instruct the processing unit 100 to execute steps of a process. The processing unit 100 may be a microprocessor or an application-specific integrated circuit (ASIC). The storage unit 102 may be read-only memory (ROM), random-access memory (RAM), non-volatile memory (e.g., an electrically erasable programmable read only memory (EEPROM) or a flash memory), CD-ROMs, magnetic tapes, floppy disks, optical data storage devices, etc., and not limited thereto.

When the user of the interactive platform 10 creates, uploads or provides the virtual object through the interactive platform 10, the interactive platform 10 encrypts the virtual object and claims the owner as the first owner of the virtual object. When the ownership of the virtual object is changed through trading, exchanging or donating, etc., the interactive platform 10 verifies the validity of the virtual object and the ownership of the virtual object. Moreover, the user of the interactive platform 10 may create the virtual object in various ways depending on a type of the virtual object. That is, once the virtual object is created in the interactive platform 10 by the user, the processing unit 100 encrypts the virtual object and manages the ownership of the virtual object according to instructions of the program code 1020 stored in the storage unit 102.

In detail, the virtual object is encrypted according to a blockchain method by the processing unit 100. Once the virtual object is created by the user, the processing unit 100 encrypts the virtual object and claims the user as the first owner of the virtual object to manage the ownership of the virtual object. It is noted that the ownership is stored by the user rather than the interactive platform 10. The user of the interactive platform 10 keeps a complete record on every virtual object the user has ever possessed. Therefore, the virtual object may be recorded by every user of the interactive platform 10 who has possessed it. Moreover, every user who has ever possessed the virtual object, including the current owner, may jointly form a blockchain (or a distributed ledger) corresponding to the virtual object, such that the ownership of the virtual object may be decentralized and stored by the blockchain corresponding to the virtual object. Notably, every user of the interactive platform 10 owns a private key and a public key for encryption and decryption. When the current owner of the virtual object intends to change the ownership, e.g. trading or donating the virtual object, an encrypted request or a digital signature, encrypted by the private key and corresponding to the transaction, will be generated by the current user and sent to the blockchain through the interactive platform 10. The encrypted request may only be decrypted by the matching public key, owned by the user who has possessed the virtual object. The request may be varied upon the transaction information of the virtual object, which further increases difficulty of faking the request. After the request is decrypted by the blockchain corresponding to the virtual object, the blockchain corresponding to the virtual object then verifies the validity of the virtual object and the ownership. Once the virtual object and the ownership of the current user are verified by the blockchain corresponding to the virtual object, the transaction immediately takes effect, overwriting the ownership of the virtual object stored by the blockchain corresponding to the virtual object, which includes the current owner and a new owner. Therefore, through the blockchain formed by every user who has possessed the virtual object, it is hard to fake the ownership record of the virtual object and further improves the information security of the interactive platform 10.

In brief, through characteristics of decentralization and indelible ledger of the blockchain method, the virtual object in the interactive platform 10 may be well encrypted and the ownership of the virtual object may be completely recorded as well. Therefore, the interactive platform 10 provides a platform that the user may freely publish his/her creation without worrying to be pirated, further improving user experience.

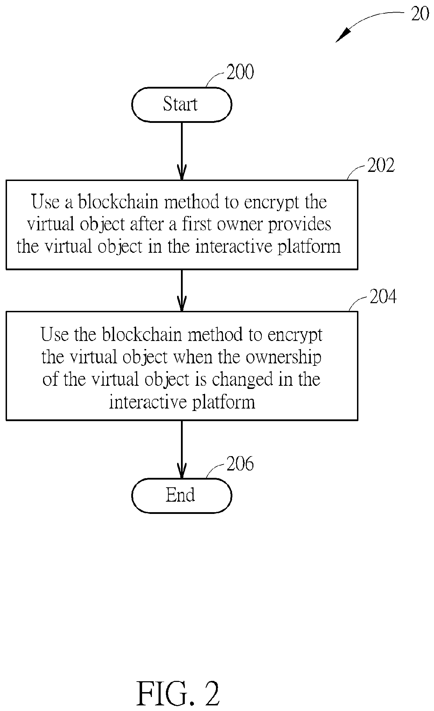

Operations of the above encryption and ownership management of the virtual object may be summarized as a process 20, as shown in Fig. 2. The process 20 may be compiled into the program code 1020, stored in the storage unit 102, and comprise the following steps:
Step 200: Start.
Step 202: Use a blockchain method to encrypt the virtual object after a first owner provides the virtual object in the interactive platform.
Step 204: Use the blockchain method to encrypt the virtual object when the ownership of the virtual object is changed in the interactive platform.
Step 206: End.

Details of the process 20 may be referred to the above, which is not narrated herein.

Note that, in one embodiment, the user of the interactive platform 10 may be a registered user, and a user identity corresponding to the user is tied to a specific device, wherein the interactive platform 10 may identify the user identification according to the linked device. Moreover, the ownership of the virtual object possessed by the user may be stored in the linked device, and the device may be a personal computer, a smart phone, a smart camera, an unmanned aerial vehicle, or a VR/AR/MR/XR device, and not limited herein, as long as the device may be utilized by the user for connecting to the interactive platform 10, and creating or exchanging the virtual object in the interactive platform 10. Moreover, the virtual object created by the user may be a VR/AR/MR/XR object, a VR/AR/MR/XR video, or a VR/AR/MR/XR scene, wherein the user of the interactive platform 10 is able to watch, listen and touch the virtual object through with the aids of the linked device.

In another embodiment, the user identity may not be tied to the specific device, such that the user may utilize different devices for logging in the interactive platform 10. Under such a circumstance, the ownership of virtual object possessed by the user may be stored in a plug-in storage device (e.g. a flash drive, an external hard drive, a memory card, etc.), wherein the user is able to log in the interactive platform 10 through a device with the plug-in storage device plugged-in. Therefore, the user may log in the interactive through the plug-in storage device, to further facilitate use of the interactive platform 10.

In another aspect, the transaction of the virtual object is not limited to exchange or donation, wherein a digital current may be involved in the transaction of the virtual object as well. That is, the owner of the virtual object is able to list a price of the virtual object in the interactive platform 10, and another user may obtain the ownership by offering the listed price. Under such a circumstance, the digital current of the user may be recorded by the blockchain method through the interactive platform 10 and verified when the ownership is changed, such that a value of the virtual object may be clearly expressed and further simplify the transaction in the interactive platform 10. Therefore, the interactive platform 10 may be a platform of encryption and ownership management to both of the virtual object and the digital current.

In addition, the transaction of the interactively platform 10 is not limited to exchange the virtual objects from the same platform, and the interactive platform 10 may exchange the virtual object from different platforms, as long as the ownership of the virtual object may be thoroughly recorded. Therefore, the interactive platform 10 may be a platform for trading or exchanging the virtual object from different platforms.

To sum up, the interactive platform 10 is not merely a VR/AR/MR/XR platform for the user to indulge in, but a platform of creation and communication since the interactive platform may protect intellectual property right of the user through thorough encryption. In addition, the ownership of the virtual object may be completely preserved to further provide the validity both of the virtual object and the owner through characteristics of decentralization and indelible ledger of the blockchain method. Therefore, the interactive platform of the present disclosure may effectively avoid piracy, further improving user experience.

The conventional online shopping platform may not verify the validity of a merchandise, and a customer is hard to tell whether the merchandise is fake or not as well. A creator may not prevent his/her creation to be pirated by others in the platform. In comparison, the interactive platform of the present disclosure may encrypt the virtual object to avoid it from piracy. Moreover, the interactive platform may keep a complete ownership record of the virtual object such that every user who has possessed it may be clearly recorded. Through characteristics of decentralization and indelible ledger of the blockchain method, the validity of the virtual object and the owner may be verified by all of the former owners, such that the interactive platform may effectively avoid piracy, further improving user experience.

## Claims

1. A method (20) of managing an ownership of a virtual object in an interactive platform, **characterized by** comprising:
using a blockchain method to encrypt the virtual object after a first owner provides the virtual object in the interactive platform (202); and
using the blockchain method to encrypt the virtual object when the ownership of the virtual object is changed in the interactive platform (204);
wherein a blockchain corresponding to the virtual object is formed by at least one user who have possessed the virtual object.

2. The method (20) of claim 1, **characterized in that** the interactive platform is a virtual reality platform, an augmented reality platform, a mixed reality platform or an extended reality platform.

3. The method (20) of claim 1, **characterized in that** the virtual object is a video, a post, an image or a soundtrack in the interactive platform, and the owner of the virtual object obtains a content of the virtual object through the interactive platform.

4. The method (20) of claim 1, **characterized in that** the steps of using the blockchain method to encrypt the virtual object when the ownership of the virtual object is changed in the interactive platform comprising:
sending an encrypted request, encrypted by the owner of the virtual object, to the interactive platform;
forwarding the request, by the interactive platform, to the blockchain corresponding to the virtual object; and
decrypting the request, by the blockchain corresponding to the virtual object, according to the blockchain method to verify a validity of the corresponding virtual object and the owner.

5. The method (20) of claim 4, **characterized in that** when the validity of the corresponding virtual object and the owner is verified, the blockchain corresponding to the virtual object is updated and a second owner owns the ownership of the virtual object.

6. An interactive platform (10) for managing an ownership of a virtual object, **characterized by** comprising:
a processing unit (100); and
a storage unit (102), for storing a program code (1020) to instruct the processing unit (100) to perform the following steps:
using a blockchain method to encrypt the virtual object after a first owner provides the virtual object in the interactive platform (202); and
using the blockchain method to encrypt the virtual object when the ownership of the virtual object is changed in the interactive platform (204);
wherein a blockchain corresponding to the virtual object is formed by at least one user who have possessed the virtual object.

7. The interactive platform (10) of claim 6, **characterized in that** the interactive platform (10) is a virtual reality platform, an augmented reality platform, a mixed reality platform or an extended reality platform.

8. The interactive platform (10) of claim 6, **characterized in that** the virtual object is a video, a post, an image or a soundtrack in the interactive platform, and the owner of the virtual object obtains a content of the virtual object through the interactive platform (10).

9. The interactive platform (10) of claim 6, **characterized in that** the program code (1020) further instructs the processing unit (100) to perform following steps, for using the blockchain method to encrypt the virtual object when the ownership of the virtual object is changed in the interactive platform:
sending an encrypted request, encrypted by the owner of the virtual object, to the interactive platform;
forwarding the request, by the interactive platform, to the blockchain corresponding to the virtual object; and
decrypting the request, by the blockchain corresponding to the virtual object, according to the blockchain method to verify a validity of the corresponding virtual object and the owner.

10. The interactive platform (10) of claim 9, **characterized in that** when the validity of the corresponding virtual object and the owner is verified, the blockchain corresponding to the virtual object is updated and a second owner owns the ownership of the virtual object.
